# EUROPÄISCHE PATENTSCHRIFT

(11) **EP 4 134 776 B1**
(45) Veröffentlichungstag und Bekanntmachung des Hinweises auf die Patenterteilung: **24.04.2024**
(21) Anmeldenummer: 22171855.4
(22) Anmeldetag: 05.05.2022
(51) Int. Cl.: G05D 16/06

(54) **DRUCKMINDERUNGSVENTIL**
PRESSURE REDUCING VALVE
SOUPAPE DE RÉDUCTION DE PRESSION

(30) Priorität: 09.08.2021 DE 102021120670
(43) Veröffentlichungstag der Anmeldung: 15.02.2023
(73) Patentinhaber: Goetze KG, 71636 Ludwigsburg (DE)
(72) Erfinder: BRAUN, David, 74821 Mosbach (DE)
(74) Vertreter: Fleck, Hermann-Josef

(56) Entgegenhaltungen:
- WO-A1-2020/233949
- US-A- 5 065 725
- US-A1- 2011 048 553

## Beschreibung

Die Erfindung bezieht sich auf ein Druckminderungsventil mit einem sich in Richtung einer Längsachse erstreckenden Ventilgehäuse aus einem von einem Fluid durchströmbaren Ventilunterteil, welches über einen zuströmseitigen Eingangsanschluss und über einen abströmseitigen Ausgangsanschluss an eine Fluidleitung anschließbar ist und in einem durchströmseitigen Ventilraum einen Ventileinsatz mit einem ein Schließelement und einen Dichtring aufweisenden Durchflussregulierungsmechanismus umfasst, und aus einem, insbesondere aus Kunststoff bestehenden, Ventiloberteil, welches einen Einstellraum mit Teilen eines Einstellmechanismus zum Einwirken auf den Durchflussregulierungsmechanismus umfasst, wobei in einem Verbindungsbereich zwischen dem Ventiloberteil und dem Ventilunterteil in einer zur Längsachse rechtwinkligen Ebene eine flexible Membran eingespannt ist, die den Einstellraum von dem Ventilraum fluiddicht trennt und einstellraumseitig von einem eine Feder abstützenden starren Membranteller bis auf einen radial außen liegenden Membranringbereich abgedeckt ist und über einen Ventilstößel mit dem Schließelement verbunden ist.

Ein Druckminderungsventil dieser Art ist in der DE 10 2019 113 168 A1 angegeben. In einem Ventilgehäuse mit einem Ventilunterteil ist ein von einem Eingangsanschluss zu einem Ausgangsanschluss führender Durchströmungskanal für ein Fluid, insbesondere Wasser, gebildet, in dem ein Durchflussregulierungsmechanismus mit einem Schließelement und einem mit diesem zusammenwirkenden Dichtring angeordnet ist, um den Fluiddurchfluss so zu regulieren, dass ein verminderter Ausgangsdruck insbesondere auch bei einem höheren Eingangsdruck eingehalten wird. Entstehen in dem stromabseitigen Leitungsnetz z. B. durch schnelles Schließen einer Auslaufarmatur oder Zuschlagen eines Kugelhahns verursachte Druckstöße, die zum Druckminderungsventil zurück reflektiert werden, ergeben sich durch Überlagerung der Druckwellen Druckschwankungen mit oft hohen sowohl positiven als auch negativen Druckspitzen, die Schäden an Armaturen verursachen können. Die hohen Druckstöße schließen das Druckminderungsventil zwangsweise mit hoher Kraft. Der Druckminderer schlägt zu. Durch die anschließende negative Druckspitze wird das Druckminderungsventil wieder schlagartig geöffnet, wodurch die nachfolgende positive Druckspitze das Druckminderungsventil erneut zuschlägt. Dies setzt sich solange fort, bis die Druckschwingung abgeflacht ist. Beim Schließen durch die starken Druckstöße dringt das Schließelement bzw. die Düse wiederholt in den Dichtring ein und kann die Dichtung beschädigen und die Funktion des Druckminderungsventils auf Dauer negativ beeinflussen.

Ein weiteres Druckminderungsventil ist aus der DE 195 39 239 A1 bekannt.

Die DE 21 01 572 A zeigt eine Drucksicherungsvorrichtung für mehrere Kreise aufweisende Druckmittelanlagen, insbesondere für Druckluftbrems- und Steuerungsanlagen von Kraftfahrzeugen.

Der vorliegenden Erfindung liegt die Aufgabe zugrunde, ein gattungsgemäßes Druckminderungsventil bereit zu stellen, welches eine erhöhte Verschleißfestigkeit insbesondere auch gegenüber Druckstößen im Leitungssystem bietet.

Diese Aufgabe wird bei dem Druckminderungsventil mit den Merkmalen des Anspruchs 1 gelöst. Erfindungsgemäß ist vorgesehen, dass in einem sich axial zwischen dem Ventiloberteil und dem Ventilunterteil erstreckenden Übergangsbereich in dem Einstellraum in einer sich rechtwinklig zur Längsachse erstreckenden, axial von dem Membranteller zum Ventiloberteil hin beabstandeten Ebene eine Widerlageranordnung als Anschlag für den Membranteller angeordnet ist, wenn ein Dichtrand des Schließelements dichtend gegen eine Dichtfläche in Andruck gebracht wird. Durch die einen Anschlag für den Membranteller bildende Widerlageranordnung wird ein übermäßiges Eindringen eines mit dem Dichtring zusammenwirkenden Schließrandes des Schließelements vermieden, da die Eindringbewegung des Schließrands in das Dichtelement in axialer Richtung (der Längsachse des Ventilgehäuses) begrenzt wird, sobald die erforderliche Dichtwirkung beim Schließen des Ventils erreicht wird. Der Anschlag kann z. B. in einem zentralen Bereich, z. B. an einer dort angeordneten zentralen Stange (vgl. die Ausführung gemäß Figuren) beispielsweise stirnseitig derselben, oder umfangsseitig von dieser beabstandet angeordnet sein. Der so gebildete Hubanschlag schützt so das Druckminderungsventil gegen hohe rückwirkende Druckstöße im stromabseitigen Leitungsnetz, da der Hubanschlag ein schädigendes Eindringen des Schließelements in die Dichtung verhindert und somit das Dichtelement auf Dauer geschont wird. Zudem wird die Membran weniger belastet. Das Druckminderungsventil wird dadurch verschleißärmer und somit langlebiger.

Eine vorteilhafte Ausgestaltung besteht darin, dass die Widerladeranordnung in einem radial von der Längsachse beabstandeten Innenumfangsbereich, insbesondere in dem Verbindungsbereich, des Ventiloberteils als Anschlag für einen umfangsseitigen Randbereich des Membrantellers ausgebildet ist.

Eine weitere vorteilhafte Ausgestaltung des Druckminderungsventils besteht darin, dass die Widerlageranordnung mehrere in Umlaufrichtung beabstandete, stirnseitig dem Ventilunterteil zugekehrte, Endflächen von sich parallel zur Längsachse erstreckenden Längsrippen aufweist, die auf der Innenseite des Ventiloberteils angeformt sind. Hierbei wird der Aufbau des Ventiloberteils zur Bildung der Widerlageranordnung und des Anschlags vorteilhaft genutzt, wenn derartige Längsrippen auf der Innenseite des vorteilhaft aus Kunststoff bestehenden Ventiloberteils bereits angeordnet sind, um z. B. eine Führung von Teilen des Einstellmechanismus zu bilden. Das Ventiloberteil kann jedoch auch aus Metall bestehen.

Eine für die Stabilität der Widerlageranordnung vorteilhafte Ausgestaltung besteht darin, dass die Widerlageranordnung als Anschlag für den Randbereich des Membrantellers einen umlaufend geschlossenen Anschlagringbereich eines metallischen Stützrings aufweist. Der metallische Stützring fängt die durch die Druckstöße bewirkten hohen Kräfte, die sich auch auf die Membran schädigend auswirken können, auf und leitet sie gleichmäßig ringsum verteilt auf die Wandung des Ventiloberteils ab. Dadurch wird auch die Membrane geschont.

Dabei besteht eine weitere vorteilhafte Ausgestaltung der Widerlageranordnung und des durch sie gebildeten Hubanschlags darin, dass der metallische Stützring einstückig radial nach außen unmittelbar oder über einen axial verlaufenden Absatz in einen vollständig umlaufenden Aufnahmeringbereich übergeht, der zur Abstützung des Membranringbereichs bei Auslenkung des Schließelements in Schließrichtung zur Abdichtung am Dichtring dient. Durch diese Ausbildung des Stützrings ergibt sich eine hohe Stabilität beim Abfangen der axial wirkenden Stoßkräfte und zudem eine schonende Abstützung der Membrane in ihrem über den äußeren umlaufenden Rand des Membrantellers radial überstehenden flexiblen Ringbereich.

Die Abstützung der Membran gegen eine übermäßige axiale Auslenkung wird dabei noch dadurch verbessert, dass der Aufnahmeringbereich eine radial ausgedehnte und zum Ventiloberteil hin gelegene konkave Einmuldung zur Einbettung des in Anlage kommenden Membranringbereichs aufweist.

Eine weitere vorteilhafte Ausgestaltung der Widerlageranordnung zur gleichmäßigen Ableitung der Kräfte in das Ventilgehäuse, insbesondere Ventiloberteil besteht darin, dass der Aufnahmeringbereich radial nach außen einstückig anschließend in einen durchgehend umlaufenden Halteabschnitt übergeht, der auf einer dem Ventilunterteil zugekehrten stirnseitigen Anlagefläche des Ventiloberteils anliegt.

Zu einer dauerhaft stabilen Ausbildung und Stützwirkung der Widerlageranordnung trägt ferner bei, dass das Ventiloberteil zwischen den stirnseitigen Endflächen der Längsrippen und der Anlagefläche mit einer an die konkave Einmuldung des Stützrings angepassten, im Längsschnitt konkaven Einformung versehen ist.

Der an sich biegesteife, insbesondere starre und aus Metall bestehende, Membranteller ist gegen axial wirkende Kräfte vorteilhaft dadurch verstärkt, dass der Membranteller an seinem Außenumfang einen sich axial erstreckenden, zu der Widerlageranordnung hin gerichteten Ringabschnitt aufweist.

Zu einer guten Wirkungsweise der Widerlageranordnung tragen ferner die Maßnahmen bei, dass ein axialer erster Abstand zwischen einem Dichtrand des Schließelements und einer mit diesem zum Unterbrechen des Durchflusses zusammenwirkenden Dichtfläche des Dichtrings um einen Bruchteil (z. B. etwa 30 %) der axialen Dicke des Dichtrings oder eines Millimeters kleiner ist als ein zweiter Abstand zwischen einer Anschlagfläche der Widerlageranordnung und dem zugekehrten Anschlagrand des Membrantellers.

Weitere vorteilhafte Maßnahmen für den Aufbau und die Wirkungsweise des Druckminderungsventils bestehen darin, dass der Durchflussregulierungsmechanismus einen in dem Ventilraum zwischen dem Einstellraum und einem Durchströmungsraum angeordneten Zwischenraum zur Druckregulierung aufweist, der von dem Einstellraum mittels der Membran und von dem Durchströmungsraum mittels eines gehäusefest eingebauten, mindestens eine Durchgangsbohrung aufweisenden Zwischenteils räumlich abgeteilt ist.

Die Erfindung wird nachfolgend anhand von Ausführungsbeispielen unter Bezugnahme auf die Zeichnungen näher erläutert. Es zeigen:
- Fig. 1: ein Ausführungsbeispiel eines erfindungsgemäßen Druckminderungsventils im Längsschnitt, das ausgangsseitig über eine Leitung an eine Verbraucherarmatur angeschlossen ist, und eine Darstellung einer in der Leitung auftretenden Druckschwingung, welche über der Zeit abklingt,
- Fig. 2: ein Druckminderungsventil nach Fig. 1 in auseinander gezogener perspektivischer Darstellung mit aufgeschnittenem Ventiloberteil,
- Fig. 3: eine vergrößerte Darstellung des Druckminderungsventils nach Fig. 1 und
- die Fig. 4A und 4B: eine Darstellung des Druckminderungsventils nach Figur 1 (Figur 4A) und einen vergrößerten Ausschnitt B desselben im Übergangsbereich zwischen seinem Ventiloberteil und Ventilunterteil in einem Einspannbereich einer Membrane (Figur 4B).

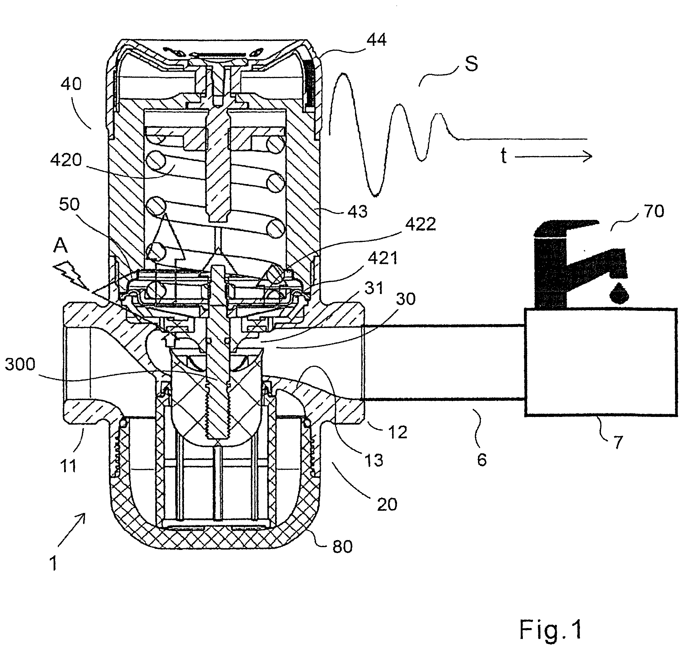

Die Fig. 1 zeigt im Längsschnitt ein Druckminderungsventil 1 (meist kurz als Druckminderer bezeichnet), welches über einen Ausgangsanschluss 12 und über eine daran angeschlossene (lediglich schematisch dargestellte) Leitung 6 eines Rohrleitungsnetztes an eine Auslaufarmatur eines Verbrauchers 7 angeschlossen ist, die z. B. einen Einhebelmischer 70 oder einen Kugelhahn aufweist. Wird eine Absperrarmatur, z. B. der Kugelhahn, schnell geschlossen bzw. zugeschlagen, kann eine Druckschwingung S mit hohen Druckstößen entstehen, die an Rohrenden, Absperrungen, Armaturen und dergleichen reflektiert werden und hohe, sowohl negative als auch positive, Druckspitzen bilden, die Schäden an Armaturen verursachen können. Die Druckschwingung S klingt über der Zeit t ab.

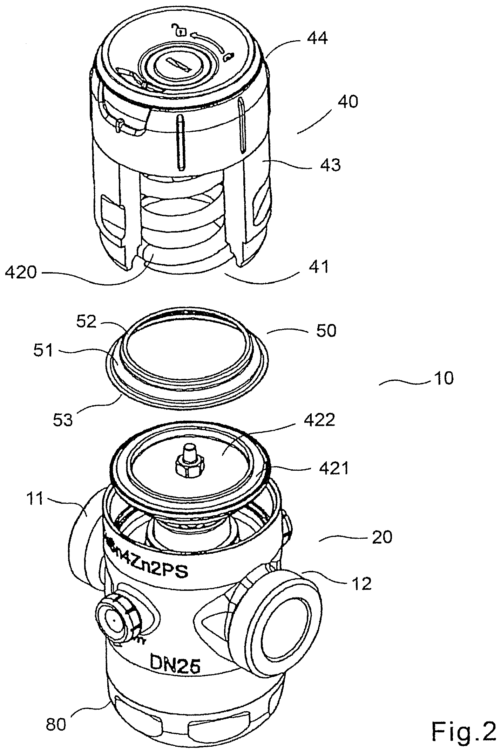

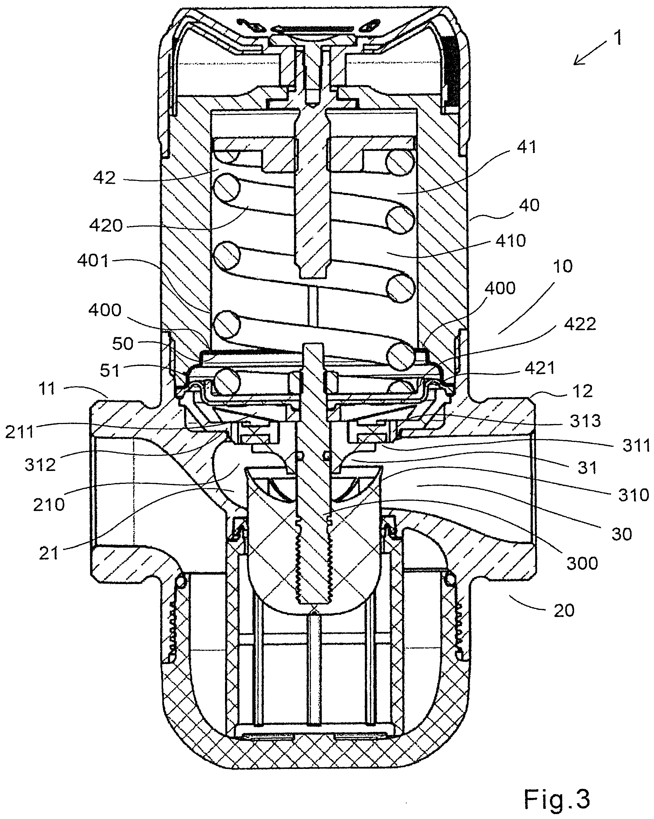

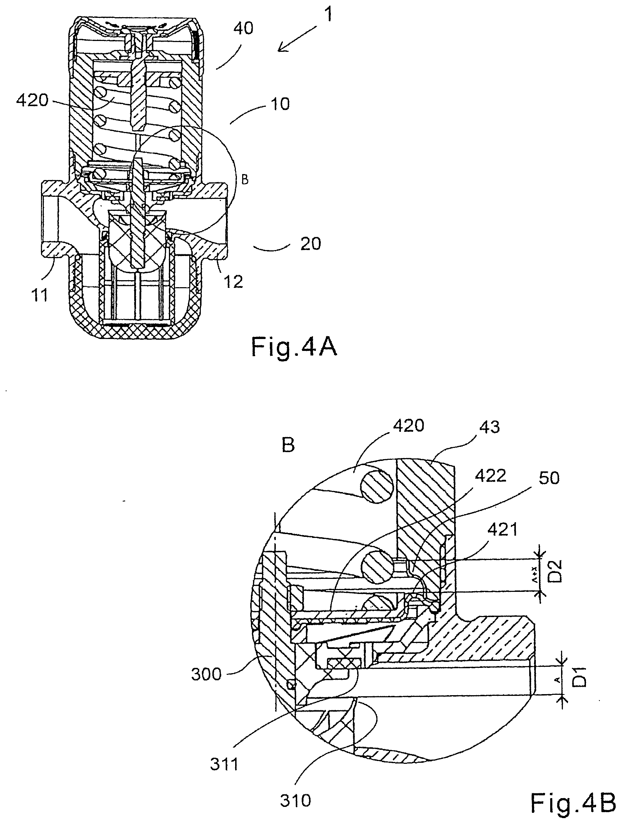

Das auch in Figur 2 (dort in auseinander gezogener perspektivischer Darstellung), Figur 3 sowie in den Figuren 4A und 4B (dort in vergrößertem Ausschnitt) gezeigte Druckminderungsventil 1 weist ein Ventilgehäuse 10 auf, das aus einem Ventilunterteil 20 (aus Metall oder Kunststoff) und einem Ventiloberteil 40 (aus Metall oder vorzugsweise Kunststoff) zusammengesetzt ist und sich in Richtung einer Längsachse erstreckt.

Das Ventilunterteil 20 ist auf seiner Unterseite mit einer Unterteilabdeckung 80 versehen und weist bezüglich der Strömungsrichtung eines hindurchfließenden Fluids, insbesondere Wasser, einen Eingangsanschluss 11 und ausgangsseitig den Ausgangsanschluss 12 auf, die mittels einer quer zur Längsachse in einem Durchströmungsraum 210 liegenden Zwischenwand 13 voneinander getrennt sind. Das Ventiloberteil 40 ist vorliegend in einem Übergangsbereich bzw. Verbindungsbereich mittels eines Außengewindes in ein angepasstes Innengewinde des Ventilunterteils 20 eingeschraubt und daran abgedichtet. Der Eingangsanschluss 11 und der Ausgangsanschluss 12, die vorliegend rechtwinklig zur Längsachse verlaufen, können in abgewandelter Ausgestaltung z. B. auch schräg bezüglich der Längsachse verlaufen.

In dem Ventiloberteil 40 ist in einem Einstellraum 41 eine Einstelleinheit 410 mit einer Feder 420 (Druckfeder) angeordnet, deren Vorspannung über Einstellkomponenten der Einstelleinheit 410 auf eine definierte Federkraft voreinstellbar ist, um bei Anwendung des Druckminderungsventils 1 ausgangsseitig ein bestimmtes Druckniveau aufrechtzuerhalten.

In dem Ventilunterteil 20 ist eine den Durchströmungsraum 210 und einen Zwischenraum 211 umfassende Druckraumanordnung ausgebildet, die von dem Einstellraum 41 mittels einer rechtwinklig zu der Längsachse eingespannten Membran 421 fluiddicht abgetrennt ist. Die Membran 421 ist umfangseitig zwischen dem Ventiloberteil 40 und dem Ventilunterteil 20 entlang einem umlaufenden Halterand eingeklemmt und in ihrem zentralen Bereich koaxial zur Längsachse von einem Ventilstößel 300 durchsetzt und an diesem abgedichtet und axial relativ zu diesem unverschieblich, ortsfest gehalten.

Auf ihrer Oberseite ist die Membran 421 in ihrem den Ventilstößel 300 umgebenden zentralen Bereich mit einem Membranteller 422 versehen, auf dessen Oberseite sich die Unterseite der Feder 420 abstützt, die auf ihrer gegenüberliegenden Oberseite an einer Komponente der Einstelleinheit 410 in Widerlage gebracht ist. Die die Feder 420 auf ihrer Oberseite abstützende Komponente ist radial außen relativ zu dem Ventiloberteil 40 unverdrehbar, jedoch axial verschiebbar gehalten, wozu auf der Innenseite eines den Einstellraum 41 umgebenden Mantelteils 43 Führungsrippen in Form von Längsrippen 401 angeformt sind, die in Axial- bzw. in Längsrichtung des Ventilgehäuses 10 verlaufende Führungsnuten der die Feder 420 oben abstützenden Komponente eingreifen. Zum Einstellen der Federkraft weist die Einstelleinheit 410 bzw. ein Einstellmechanismus 42 einen die Komponente durchsetzenden Einstellbolzen mit einem Außengewinde auf, in den ein zentrales Innengewinde der Komponente eingreift, sodass diese beim Drehen des Einstellbolzens axial bewegt wird, um eine bestimmte Federkraft einzustellen. Das Ventiloberteil 40 ist an seiner Oberseite mittels einer Kappe 44 abgedeckt.

Die Membran 421 ist vorliegend zusammen mit einem Außenring eines Zwischenteils 312 zwischen dem Ventiloberteil 40 und dem Ventilunterteil 20 umfangseitig mit ihrem Halterand eingespannt bzw. eingeklemmt und bildet zusammen mit der Oberseite des Zwischenteils 312 und ihrer Unterseite den Zwischenraum 211. Der Zwischenraum 211 ist über Durchgangsbohrungen 313 mit dem ausgangsseitigen Durchströmungsraum 210 fluidleitend bzw. flüssigkeitsleitend in Verbindung gebracht, um den ausgangsseitigen Druck auf ein möglichst konstantes Druckniveau zu regulieren.

Die Membran 421 ist flexibel ausgebildet und insbesondere zwischen ihrem umfangseitig eingespannten Halterand und dem davon radial nach innen beabstandeten Umfang des Membrantellers 422 flexibel gestaltet. Dadurch ist die Membran 421 in axialer Richtung zusammen mit dem Ventilstößel 300 hin und her, vorliegend also auf und ab bewegbar, wobei in dem Zwischenraum 211 in Folge des dort über die Durchgangsbohrungen 313 herrschenden Fluid- bzw. Flüssigkeitsdrucks eine Membrankraft auf der Unterseite der Membran 421 erzeugt wird, die der auf der Oberseite der Membran wirkenden Federkraft entgegengerichtet ist. Bei Ausgleich zwischen Membrankraft und Federkraft nimmt dadurch die Membran 421 mit dem an ihr axial unverschieblich angebrachten Ventilstößel 300 eine definierte axiale Position in Abhängigkeit von dem in dem Durchströmungsraum 210 vorliegenden Fluiddruck ein.

Der Ventilstößel 300 ist axial verschieblich durch eine zentrale Durchgangsöffnung des Zwischenteils 312 geführt, wobei in dem gezeigten Ausführungsbeispiel in den zentralen Bereich eines Außenrings desselben ein Mittelteil als axiale Führung für den Ventilstößel 300 unter Abdichtung gegenüber dem Ventilstößel 300 eingesetzt ist. Der Ventilstößel 300 trägt auf seinem nach unten anschließenden Abschnitt ein ortsfest an ihm angebrachtes und somit mit ihm zusammen axial bewegtes Schließelement 310, das mit einer umfangseitigen zylindrischen Wandung versehen ist und damit verschieblich und abgedichtet in einer Durchführung im zentralen Bereich der Zwischenwand konzentrisch zur Längsachse des Ventilgehäuses 10 eingesetzt und geführt ist, wobei in die die Durchführöffnung umgebende Wandung ein Dichtmittel eingesetzt ist. In das Schließelement 310 sind ein oder mehrere Strömungskanäle eingebracht, die bei dem gezeigten Ausführungsbeispiel parallel zur Längsachse bzw. Achse des Ventilstößels 300 verlaufen und die Strömungsverbindung zwischen dem Eingangsbereich und dem Ausgangsbereich im Durchströmungsraum 210 herstellen.

Der Durchströmungsquerschnitt wird mittels eines Ventileinsatzes 30 erzeugt, der die Membraneinheit mit der Membran 421 und dem Membranteller 422, den Zwischenteil 312, das Schließelement 310 sowie den Ventilstößel 300 umfasst und so ausgebildet ist, dass ein Durchflussregulierungsmechanismus 31 hergestellt ist, durch den ein ausgangsseitig einzuhaltendes konstantes Druckniveau möglichst genau eingeregelt wird. Dabei ist in dem Ventilunterteil 20 unterhalb der Membran 421 ein Ventilraum 21 gebildet, der den Durchströmungsraum 210 und den zwischen dem Zwischenteil 312 und der Unterseite der Membran 421 gebildeten Zwischenraum 211 umfasst.

Das Schließelement 310 ist in seinem dem Ventiloberteil 40 zugewandten oberen Randbereich mit einer umlaufenden Dichtkante bzw. einem Dichtrand versehen, der mit einem an der Unterseite des Zwischenteils 312 eingesetzten, umlaufenden Dichtring 311 fluiddichtend in Anlage gebracht werden kann, um den Durchfluss des Fluids bzw. der Flüssigkeit von dem Eingangsbereich zum Ausgangsbereich über den Durchströmungsraum 210 zu unterbrechen. Im Normalfall ist der Durchströmungsquerschnitt zwischen dem Dichtrand des Schließelements 310 und der Dichtfläche des Dichtrings 311 durch den sich selbsttätig regelnden Ausgleich zwischen der Federkraft und einer im Bereich der Membran 421 sich ergebenden Gegenkraft (Membrankraft) soweit geöffnet, dass sich ausgangsseitig das vorgegebene Druckniveau auch bei unterschiedlichen eingangsseitigen Fluiddrücken einstellt. Zum Erreichen einer möglichst genauen Einregelung des ausgangsseitigen Druckniveaus können die Strömungsverhältnisse in dem Durchströmungsraum 210 unterhalb des Zwischenteils 312 gezielt beeinflusst werden, beispielsweise durch einen über die Durchgangsbohrungen 313 bewirkten signifikanten Venturi-Effekt, wie in der eingangs genannten DE 10 2019 113 168 A1 im Einzelnen ausgeführt ist. Diese Maßnahmen werden vorzugsweise auch bei dem vorliegenden Druckminderungsventil ergriffen. Jedoch sind auch andere entsprechende Maßnahmen zur Regulierung des Druckniveaus möglich.

Tritt jedoch in der ausgangsseitigen Leitungsanordnung eine Druckschwingung S mit hohen positiven und negativen Druckspitzen bzw. Druckstößen z. B. beim schnellen Schließen bzw. Zuschlagen eines Kugelhahns auf, wie vorstehend beschrieben, so schließen die hohen Drücke das Druckminderungsventil 1 zwangsweise kurzzeitig mit hoher Kraft, wobei das Druckminderungsventil zuschlägt. Dabei kann der Dichtring 311 beschädigt werden und auch die Membraneigenschaften können durch die hohe dynamische Belastung beeinträchtigt werden, wie sich aus eingehenden Untersuchungen der Erfinder ergeben hat. Die negativen Einflüsse sind der Funktionsfähigkeit des Druckminderungsventils, insbesondere auf Dauer, abträglich.

Erfindungsgemäß werden die negativen Einflüsse durch Druckstöße mittels eines Hubanschlags zumindest weitgehend unterbunden. Der Hubanschlag begrenzt die axiale Bewegung des Schließelements 310 so, dass der Dichtrand des Schließelements 310 nur soweit an die Dichtfläche des Dichtrings 311 angedrückt wird, dass der Durchströmquerschnitt, d.h. der Durchfluss durch das Druckminderungsventils 1 unterbrochen wird, der Dichtrand des Schließelements 310 jedoch nicht schädigend in den Dichtring 311 eindringt.

Bei dem in den Fig. 1, 2, 3 und 4A, 4B gezeigten Ausführungsbeispiel ist im Unterschied zu dem in der eingangs genannten DE 10 2019 113 168 A1 im Innenumfangsbereich des Ventiloberteils 40 eine radial nach Innen gerichtete Widerlageranordnung gebildet, an der der äußere umlaufende Rand des Membrantellers 422 anschlägt, wenn das Schließelement 310 dichtend an die Dichtfläche des Dichtrings 311 soweit angedrückt ist, dass der Durchfluss des Fluids bzw. der Flüssigkeit (insbesondere Wasser) unterbunden, jedoch der Dichtring 311 nicht soweit verformt wird, dass er beschädigt wird. Die Bewegung des Schließelements 310 wird über den ortsfest mit ihm verbundenen Ventilstößel auf die ebenfalls ortsfest mit ihm verbundene Membran 421 und den Membranteller 422 übertragen. Ein erster Abstand D1 zwischen dem Dichtrand des Schließelements 310 und der Dichtfläche des Dichtrings 311 und ein zweiter Abstand D2 zwischen dem umlaufenden Rand des Membrantellers 422 und dem durch die Widerlageranordnung 400 an Anschlagstellen A sind so aufeinander abgestimmt, dass ein übermäßiges Eindringen des Dichtrands des Schließelements 310 in den Dichtring 311 verhindert ist (vgl. Fig. 1 und 4B). Dabei kann zum guten Dichten ein leichtes Verformung des Dichtrings 311 im Bereich des mit dem Dichtrand des Schließelements 310 zusammenwirkenden Dichtbereichs erlaubt sein, je nach Material des Dichtrings 311, sodass der zweite Abstand D2 geringfügig (jedenfalls im Bruchteilbereich der axialen Dicke des Dichtrings oder eines Millimeters) größer ist als der erste Abstand D1.

Beispielsweise ist die Widerlageranordnung für den äußeren umlaufenden Rand des Membrantellers 422 an stirnseitigen Endflächen der radial von der Innenfläche des Mantelteils 43 des Ventiloberteils 40 gebildet, die eine Führung für eine Einstellkomponente der Feder 420 bilden. Derartige Längsrippen sind entlang der Innenwandung des Mantelteils 43 beispielsweise in Umlaufrichtung gleichmäßig verteilt angeformt, sodass sich umlaufend genügend viele derartiger Anschlagflächen der Widerlageranordnung 400 ergeben. Dabei kann der Mantelteil 43 des Ventiloberteils 40 aus geeignetem Kunststoffmaterial bestehen. Denkbar ist auch ein durchgehend angeformter Anschlagring.

Eine vorteilhafte erfindungsgemäße Weiterbildung der Widerlageranordnung 400 umfasst einen metallischen Stützring 50, der stirnseitig in eine betreffend ausgebildete umlaufende Kontur an der dem Ventilunterteil 20 zugekehrten Stirnseite des Mantelteils 43 eingeformt ist. Dabei kann der Stützring 50 z. B. lediglich einen an der Stirnseite der Längsrippen 401 oder einer umlaufenden Anschlagkontur des Mantelteils 43 anliegenden Anschlagringbereich 52 aufweisen. Ergänzend kann der Stützring bezüglich seiner Querschnittskontur in einen einstückig an den Anschlagringbereich 52 mit oder ohne axial (in Richtung der Längsachse des Ventilgehäuses 10) verlaufenden Abschnitt anschließenden Aufnahmeringbereich 51 übergehen, der konkav zum Ventiloberteil 40 und radial nach außen eingemuldet ist, um einen Anlagebereich für den radial außerhalb des Membrantellers 422 liegenden, umlaufenden Ringbereich der Membran 421 zu bilden. Beim stoßartigen Auslenken durch Druckstöße wird somit durch den Aufnahmeringbereich 51 auch die Membran 421 vorteilhaft durch den Stützring 50 abgestützt und dadurch zusätzlich geschont. Zudem weist der Stützring 50 bei dem dargestellten Ausführungsbeispiel (aber nicht notwendigerweise) noch einen radial nach außen gerichteten, durchgehend umlaufenden Halteabschnitt 53 auf, in den der Aufnahmeringbereich 51 (gegebenenfalls über einen weiteren Übergangsabschnitt oder unmittelbar) übergeht. Mittels des Halteabschnitts 53 kann der Stützring 50 zusätzlich auf der Stirnseite des Mantelteils 43 des Ventiloberteils 40 abgestützt werden, sodass durch Druckstöße auftretende Stoßkräfte weiterhin vorteilhaft abgefangen werden. Der dem Ventilunterteil 20 zugekehrte stirnseitige Endbereich des Mantelteils 43 des Ventiloberteils 40 ist vorteilhaft in seiner Querschnittskontur an den Querschnitt des Stützrings 50 angepasst, wie insbesondere auch die vergrößerte Darstellung in Fig. 4B erkennen lässt. Über den Stützring 50 werden von dem äußeren umlaufenden Bereich des Membrantellers 422 auf den Mantelteil 43 ausgeübte Stoßkräfte wirksam abgefangen und umlaufseitig in den Mantelteil 43 bzw. das Ventiloberteil 40 und das dieses aufnehmende Ventilunterteil 20 abgeleitet. Somit werden der Dichtring 311 und auch die Membran 421 vor einer Schädigung durch Stoßkräfte in Folge reflektierter Schwingungen im Leitungsnetz geschützt.

Vorteilhaft ist der Membranteller 422 seinerseits mittels eines axial vorstehenden, umlaufenden ringförmigen äußeren Bereichs gegen axiale Durchwölbungen verstärkt, sodass sich in Verbindung mit der beschriebenen Widerlageranordnung 400 entsprechend hohe Stützkräfte ergeben.

Die erfindungsgemäße Ausgestaltung des Druckminderungsventils 1 mit der Widerlageranordnung trägt wesentlich zu einer langlebigen, verschleißarmen Funktionsfähigkeit des Druckminderungsventils 1 bei.

## Patentansprüche

1. Druckminderungsventil (1) mit einem sich in Richtung einer Längsachse erstreckenden Ventilgehäuse (10) aus einem von einem Fluid durchströmbaren Ventilunterteil (20), welches über einen zuströmseitigen Eingangsanschluss (11) und über einen abströmseitigen Ausgangsanschluss (12) an eine Fluidleitung anschließbar ist und in einem durchströmseitigen Ventilraum (21) einen Ventileinsatz (30) mit einem ein Schließelement (310) und einen Dichtring (311) aufweisenden Durchflussregulierungsmechanismus (31) umfasst, und aus einem, insbesondere aus Kunststoff bestehenden, Ventiloberteil (40), welches einen Einstellraum (41) mit Teilen eines Einstellmechanismus (42) zum Einwirken auf den Durchflussregulierungsmechanismus (31) umfasst, wobei in einem Verbindungsbereich zwischen dem Ventiloberteil (40) und dem Ventilunterteil (20) in einer zur Längsachse rechtwinkligen Ebene eine flexible Membran (421) eingespannt ist, die den Einstellraum (41) von dem Ventilraum (21) fluiddicht trennt und einstellraumseitig von einem eine Feder (420) abstützenden starren Membranteller (422) bis auf einen radial außen liegenden Membranringbereich abgedeckt ist und über einen zentralen Ventilstößel (300) mit dem Schließelement (310) verbunden ist,
**dadurch gekennzeichnet,**
**dass** in einem sich axial in dem Verbindungsbereich zwischen dem Ventiloberteil (40) und dem Ventilunterteil (20) erstreckenden Übergangsbereich in dem Einstellraum (41) in einer sich rechtwinklig zur Längsachse erstreckenden, axial von dem Membranteller (422) zum Ventiloberteil (40) hin beabstandeten Ebene eine Widerlageranordnung (400) als Anschlag für den Membranteller (422) angeordnet ist, wenn ein Dichtrand des Schließelements (310) dichtend gegen eine Dichtfläche in Andruck gebracht wird.

2. Druckminderungsventil nach Anspruch 1,
**dadurch gekennzeichnet,**
**dass** die Widerladeranordnung (400) in einem radial von der Längsachse beabstandeten Innenumfangsbereich des Ventiloberteils (40) als Anschlag für einen umfangsseitigen Randbereich des Membrantellers (422) ausgebildet ist.

3. Druckminderungsventil nach Anspruch 1 oder 2,
**dadurch gekennzeichnet,**
**dass** die Widerlageranordnung (400) mehrere in Umlaufrichtung beabstandete, stirnseitige dem Ventilunterteil (20) zugekehrte, Endflächen von sich parallel zur Längsachse erstreckenden Längsrippen (401) aufweist, die auf der Innenseite des Ventiloberteils (40) angeformt sind.

4. Druckminderungsventil nach einem der vorhergehenden Ansprüche,
**dadurch gekennzeichnet,**
**dass** die Widerlageranordnung (400) als Anschlag für den Randbereich des Membrantellers (422) einen umlaufend geschlossenen Anschlagringbereich (52) eines metallischen Stützrings (50) aufweist.

5. Druckminderungsventil nach Anspruch 4,
**dadurch gekennzeichnet,**
**dass** der metallische Stützring (50) einstückig radial nach außen unmittelbar oder über einen axial verlaufenden Absatz in einen vollständig umlaufenden Aufnahmeringbereich (51) übergeht, der zur Abstützung des Membranringbereichs bei Auslenkung des Schließelements (310) in Schließrichtung bei Abdichtung am Dichtring (311) dient.

6. Druckminderungsventil nach Anspruch 5,
**dadurch gekennzeichnet,**
**dass** der Aufnahmeringbereich (51) eine radial ausgedehnte und zum Ventiloberteil (40) hin gelegene konkave Einmuldung zur Einbettung des mit ihm in Anlage kommenden Membranringbereichs aufweist.

7. Druckminderungsventil nach Anspruch 5 oder 6,
**dadurch gekennzeichnet,**
**dass** der Aufnahmeringbereich (51) radial nach außen einstückig anschließend in einen durchgehend umlaufenden Halteabschnitt (53) übergeht, der auf einer dem Ventilunterteil (20) zugekehrten stirnseitigen Anlagefläche des Ventiloberteils (40) anliegt.

8. Druckminderungsventil nach Anspruch 7,
**dadurch gekennzeichnet,**
**dass** das Ventiloberteil (40) zwischen den stirnseitigen Endflächen der Längsrippen (401) und der Anlagefläche mit einer an die konkave Einmuldung des Stützrings (50) angepassten, im Längsschnitt konkaven Einformung versehen ist.

9. Druckminderungsventil nach einem der vorhergehenden Ansprüche,
**dadurch gekennzeichnet,**
**dass** der Membranteller (422) an seinem Außenumfang einen sich axial erstreckenden, zu der Widerlageranordnung (400) hin gerichteten Ringabschnitt aufweist.

10. Druckminderungsventil nach einem der vorhergehenden Ansprüche,
**dadurch gekennzeichnet,**
**dass** ein axialer erster Abstand (D1) zwischen einem Dichtrand des Schließelements (310) und einer mit diesem zum Unterbrechen des Durchflusses zusammenwirkenden Dichtfläche des Dichtrings (311) um einen Bruchteil der axialen Dicke des Dichtrings oder eines Millimeters kleiner ist als ein zweiter Abstand (D2) zwischen der Anschlagfläche der Widerlageranordnung (400) und dem zugekehrten Anschlagrand des Membrantellers (422).

11. Druckminderungsventil nach einem der vorhergehenden Ansprüche,
**dadurch gekennzeichnet,**
**dass** der Durchflussregulierungsmechanismus einen in dem Ventilraum (21) zwischen dem Einstellraum (41) und einem Durchströmungsraum (210) angeordneten Zwischenraum (211) zur Druckregulierung aufweist, der von dem Einstellraum (41) mittels der Membran (421) und von dem Durchströmungsraum (210) mittels eines gehäusefest eingebauten, mindestens eine Durchgangsbohrung (313) aufweisenden Zwischenteils (312) räumlich abgeteilt ist.

## Claims

1. Pressure reducing valve (1) having a valve housing (10) which extends in the direction of a longitudinal axis and consists of a valve lower part (20), through which a fluid can flow, and which can be connected to a fluid line via an inflow-side inlet connection (11) and via an outflow-side outlet connection (12) and, in a valve space (21) on the through-flow side, comprises a valve insert (30) which has a flow control mechanism (31) having a closing element (310) and a sealing ring (311), and of a valve upper part (40), which is in particular made of plastics material and comprises an adjustment space (41) having parts of an adjusting mechanism (42) for acting on the flow control mechanism (31), a flexible diaphragm (421) being inserted in a connection region between the valve upper part (40) and the valve lower part (20) in a plane orthogonal to the longitudinal axis, which diaphragm fluidically separates the adjustment space (41) from the valve space (21) and is covered on the adjustment-space side by a rigid diaphragm disc (422), which supports a spring (420), up to a radially external diaphragm ring region and is connected by means of a central valve tappet (300) to the closing element (310),
**characterized in that**
an abutment arrangement (400) is arranged as a stop for the diaphragm disc (422) in a transition region extending axially in the connection region between the valve upper part (40) and the valve lower part (20) in the adjustment space (41), in a plane extending orthogonally to the longitudinal axis and spaced axially apart from the diaphragm disc (422) toward the valve upper part (40), when a sealing edge of the closing element (310) is brought to press against a sealing surface in a sealing manner.

2. Pressure reducing valve according to claim 1,
**characterized in that**
the abutment arrangement (400) is formed as a stop for a circumferential edge region of the diaphragm disc (422) in an inner circumferential region of the valve upper part (40) which is radially spaced apart from the longitudinal axis.

3. Pressure reducing valve according to claim 1 or claim 2,
**characterized in that**
the abutment arrangement (400) has a plurality of end faces, spaced apart in the circumferential direction and facing the valve lower part (20), of longitudinal ribs (401) which extend in parallel with the longitudinal axis and are integrally molded on the inner side of the valve upper part (40).

4. Pressure reducing valve according to any of the preceding claims,
**characterized in that**
the abutment arrangement (400) has a circumferentially closed stop ring region (52) of a metal support ring (50) as a stop for the edge region of the diaphragm disc (422).

5. Pressure reducing valve according to claim 4,
**characterized in that**
the metal support ring (50) transitions in one piece radially outwardly, directly or via an axially extending shoulder, into a completely circumferential receiving ring region (51) which is used to support the diaphragm ring region when the closing element (310) is deflected in the closing direction during sealing on the sealing ring (311).

6. Pressure reducing valve according to claim 5,
**characterized in that**
the receiving ring region (51) has a radially extended concave indentation facing toward the valve upper part (40) for embedding the membrane ring region coming into contact therewith.

7. Pressure reducing valve according to claim 5 or claim 6,
**characterized in that**
the receiving ring region (51) transitions in one piece radially outwardly into a continuously circumferential holding portion (53), which rests against an end contact surface of the valve upper part (40) that faces the valve lower part (20).

8. Pressure reducing valve according to claim 7,
**characterized in that**
the valve upper part (40) is provided with a recess which is adapted to the concave indentation of the support ring (50) and is concave in the longitudinal section, between the end faces of the longitudinal ribs (401).

9. Pressure reducing valve according to any of the preceding claims,
**characterized in that**
the diaphragm disc (422) has, on its outer circumference, an axially extending ring portion directed toward the abutment arrangement (400).

10. Pressure reducing valve according to any of the preceding claims,
**characterized in that**
an axial first distance (D1) between a sealing edge of the closing element (310) and a sealing surface of the sealing ring (311), which sealing surface interacts with said sealing edge in order to interrupt the flow, is smaller than a second distance (D2) between the stop surface of the abutment assembly (400) and the facing stop edge of the diaphragm disc (422) by a fraction of the axial thickness of the sealing ring or by a millimetre.

11. Pressure reducing valve according to any of the preceding claims,
**characterized in that**
the flow control mechanism has an intermediate space (211) for controlling pressure arranged in the valve space (21) between the adjustment space (41) and a flow space (210), which intermediate space is spatially separated from the adjustment space (41) by means of the diaphragm (421) and from the flow space (210) by means of an intermediate part (312) which is installed fixed to the housing and has at least one through-hole (313).

## Revendications

1. Soupape de réduction de pression (1) comportant un boîtier de soupape (10) s'étendant dans la direction d'un axe longitudinal, lequel boîtier de soupape est composé d'une partie inférieure de soupape (20) qui peut être raccordée à une conduite de fluide par l'intermédiaire d'un raccord d'entrée (11) côté afflux et par l'intermédiaire d'un raccord de sortie (12) côté écoulement, et comprend, dans une chambre de soupape (21) côté circulation, un insert de soupape (30) comportant un mécanisme de régulation de débit (31) présentant un élément de fermeture (310) et un anneau d'étanchéité (311), et est composé d'une partie supérieure de soupape (40), en particulier constituée de matière plastique, laquelle partie supérieure de soupape comprend une chambre de réglage (41) comportant des parties d'un mécanisme de réglage (42) destinées à agir sur le mécanisme de régulation de débit (31), une membrane (421) flexible étant enserrée, dans une zone de liaison, entre la partie supérieure de soupape (40) et la partie inférieure de soupape (20) dans un plan perpendiculaire à l'axe longitudinal, laquelle membrane sépare de manière étanche aux fluides la chambre de réglage (41) de la chambre de soupape (21) et est recouverte, côté chambre de réglage, par un disque de membrane (422) rigide supportant un ressort (420), à l'exception d'une zone d'anneau à membrane radialement extérieure, et est reliée à l'élément de fermeture (310) par l'intermédiaire d'un poussoir de soupape (300) central,
**caractérisée en ce que**,
dans une zone de transition s'étendant axialement dans la zone de liaison entre la partie supérieure de soupape (40) et la partie inférieure de soupape (20) dans la chambre de réglage (41) dans un plan s'étendant perpendiculairement à l'axe longitudinal et espacé axialement du disque de membrane (422) par rapport à la partie supérieure de soupape (40), un agencement de contre-palier (400) est disposé comme butée pour le disque de membrane (422) lorsqu'un bord d'étanchéité de l'élément de fermeture (310) est mis en appui de manière étanche contre une surface d'étanchéité.

2. Soupape de réduction de pression selon la revendication 1,
**caractérisée en ce que**
l'agencement de contre-palier (400) est réalisé comme butée pour une zone de bord côté circonférence du disque de membrane (422), dans une zone circonférentielle intérieure de la partie supérieure de soupape (40), laquelle zone circonférentielle est espacée radialement de l'axe longitudinal.

3. Soupape de réduction de pression selon la revendication 1 ou 2,
**caractérisée en ce que**
l'agencement de contre-palier (400) présente plusieurs surfaces d'extrémité de nervures longitudinales (401) s'étendant parallèlement à l'axe longitudinal, lesquelles nervures sont formées sur le côté intérieur de la partie supérieure de soupape (40), lesquelles surfaces d'extrémité sont espacées dans la direction circonférentielle, frontales et tournées vers la partie inférieure de soupape (20).

4. Soupape de réduction de pression selon l'une des revendications précédentes, **caractérisée en ce que**
l'agencement de contre-palier (400) présente, comme butée pour la zone de bord du disque de membrane (422), une zone annulaire de butée (52) circonfé-rentiellement fermée d'un anneau d'appui (50) métallique.

5. Soupape de réduction de pression selon la revendication 4,
**caractérisée en ce que**
l'anneau d'appui (50) métallique se prolonge radialement d'un seul tenant vers l'extérieur, directement ou par l'intermédiaire d'un épaulement s'étendant axialement, dans une zone d'anneau de réception (51) complètement circonférentielle, laquelle est destinée à supporter la zone d'anneau à membrane lors du déplacement de l'élément de fermeture (310) dans la direction de fermeture pour le sceller sur l'anneau d'étanchéité (311).

6. Soupape de réduction de pression selon la revendication 5,
**caractérisée en ce que**
la zone d'anneau de réception (51) présente une dépression concave expansée radialement et située face à la partie supérieure de soupape (40) pour l'encastrement de la zone d'anneau à membrane qui vient en appui sur la zone d'anneau de réception.

7. Soupape de réduction de pression selon la revendication 5 ou 6,
**caractérisée en ce que**
la zone d'anneau de réception (51) se prolonge radialement d'un seul tenant vers l'extérieur puis dans une section de retenue (53) continûment circonférentielle qui s'appuie sur une surface d'appui frontale de la partie supérieure de soupape (40), laquelle surface d'appui frontale est tournée vers la partie inférieure de soupape (20).

8. Soupape de réduction de pression selon la revendication 7,
**caractérisée en ce que**
la partie supérieure de soupape (40) est pourvue d'une cavité adaptée à la dépression concave de l'anneau d'appui (50) et concave en section longitudinale entre les surfaces d'extrémité frontales des nervures longitudinales (401) et la surface d'appui.

9. Soupape de réduction de pression selon l'une des revendications précédentes, **caractérisée en ce que**
le disque de membrane (422) présente, sur sa circonférence extérieure, une section annulaire s'étendant axialement et dirigée vers l'agencement de contre-palier (400).

10. Soupape de réduction de pression selon l'une des revendications précédentes, **caractérisée en ce**
**qu'**une première distance (D1) axiale entre un bord d'étanchéité de l'élément de fermeture (310) et une surface d'étanchéité de l'anneau d'étanchéité (311), laquelle surface d'étanchéité coopère avec l'élément de fermeture pour interruption du flux, est inférieure, d'une fraction de l'épaisseur axiale de l'anneau d'étanchéité ou d'un millimètre, à une seconde distance (D2) entre la surface d'appui de l'agencement de contre-palier (400) et le bord de butée opposé du disque de membrane (422).

11. Soupape de réduction de pression selon l'une des revendications précédentes, **caractérisée en ce que**
le mécanisme de régulation de débit présente un espace intermédiaire (211) disposé dans la chambre de soupape (21) entre la chambre de réglage (41) et une chambre de circulation (210) pour la régulation de la pression, lequel espace intermédiaire est délimité spatialement de la chambre de réglage (41) à l'aide de la membrane (421) et de la chambre de circulation (210) à l'aide d'une pièce intermédiaire (312) montée fixement sur le boîtier et présentant au moins un alésage traversant (313).
